# EUROPEAN PATENT APPLICATION

(11) **EP 2 492 778 A1**
(43) Date of publication of application: **29.08.2012**
(21) Application number: 11155674.2
(22) Date of filing: 23.02.2011
(51) Int. Cl.: G06F 3/02, H04M 1/22, H05B 37/00

(54) **Uniform keyboard illumination**

(71) Applicant: Research In Motion Limited, Waterloo, ON N2L 3W8 (CA)
(72) Inventor: Broga Antanas Matthew, Waterloo Ontario N2L 3W8 (CA); Fletcher Bergen Albert, Waterloo Ontario N2L 3W8 (CA)
(74) Representative: Patel, Binesh

(57) **Abstract**

An input device includes an array of keys and an illumination system. Each key comprises a key face that is configured for transmission of light. The illumination system includes a light guide disposed below the keys, a plurality of lamps mounted to the light guide, and a lamp controller electrically coupled to the lamps. The light guide is configured to illuminate the key faces via the lamps. The lamp controller is configured to repeatedly illuminate the lamps each for a respective on-time interval of a common illumination period. The location of the lamps and the illumination period and each said on-time interval are selected for the visual appearance of continuous substantially uniform illumination of the array of keys.

## Description

### FIELD OF THE INVENTION

This patent application relates to a method of illuminating a data input device of an electronic communications device and, in particular, to a uniform keyboard/keypad illumination.

### BACKGROUND OF THE INVENTION

Many portable electronic communications devices, such as wireless telephones, personal data assistants, and wireless pagers, include a data input device, such as a keyboard or keypad, for providing text input and/or controlling the device. The keyboard or keypad includes an array of keys, that is, a plurality of physical buttons or other actuators formed in a useful arrangement. To facilitate viewing of the input device in dim ambient light, the communications device may include a lamp, such as a keyboard/keypad backlight, that illuminates the keys of the input device when the communications device is active. Since backlighting demands power, backlighting results in depletion of the power stored in the device's portable power supply. Accordingly, the communications device may include an ambient light sensor that is used to determine whether there may be a benefit to activating the lamp.

### BRIEF DESCRIPTION OF THE DRAWINGS

An exemplary keyboard/keypad backlight, electronic communications device, and method of illuminating a keyboard/keypad will now be described, with reference to the accompanying drawings, in which:
Fig. 1 is a front plan view of an electronic communications device, that an includes an illuminated keyboard;
Fig. 2 is a schematic view of certain functional details of the communications device;
Fig. 3 is an exploded view of the illuminated keyboard;
Fig. is a cross-sectional view of the illuminated keyboard;
Figs. 5a and 5b are schematic diagrams that depict the electrical configuration of two embodiments of the illumination system for the keyboard;
Fig. 6a is a timing diagram that depicts the operation of the illumination system shown in Fig. 5a;
Fig. 6b is a timing diagram that depicts the operation of the illumination system shown in Fig. 5b;
Figs. 7a and 7b are schematic diagrams that depict the electrical configuration of two additional embodiments of the illumination system; and
Fig. 8 is a timing diagram that depicts the operation of the illumination system shown in Figs. 7a and 7b

### DETAILED DESCRIPTION

A typical keyboard or keypad backlight includes a flat light guide plate that is disposed below the array of keys, and a number of light emitting elements—such as light emitting diodes (LEDs)—that are scattered throughout the light guide. Alternately, the LEDs may be positioned along one of the side walls of the light guide plate.

Maintaining uniformity in the intensity of light produced by the backlight, across the keyboard/keypad can be difficult owing to variations in the characteristics of the LEDs. These deficiencies may be typically addressed by providing each LED with its own current source/sink, and matching the current sources/sinks. However, the large number of matched current sources/sinks and associated connections increases the size and cost of the power management integrated circuit. There may be other drawbacks to this arrangement as well.

In contrast to an approach that tries to match LEDs is an approach that tries to promote uniformity by manufacturing the light guide plate with a particular geometry. This approach may cause concerns with space and manufacturing tolerances.

The concepts described herein are directed to another approach, in which the keyboard/keypad receives illumination from several lamps via a light guide. A lamp controller is electrically coupled to the lamps. (Two components are electrically coupled when the electrical activity of one can affect the electrical activity of the other; the components need not be proximate to one another or directly physically connected to be electrically coupled.) The lamp controller illuminates each lamp for a time interval called the on-time interval. By controlling the on-time interval for each lamp, the keyboard/keypad can be illuminated in a fashion that to a user may appear substantially uniform and substantially continuous. By way of overview, in a first aspect this patent application describes an input device that may be used in an electronic communications device. As will be described in further detail below, the input device comprises an array of keys and an illumination system.

Each of the keys comprises a key face that is configured for transmission of light. (In general, an element is configured to perform or configured for performing a function if the element is capable of carrying out that function.) The illumination system comprises a light guide disposed below the keys, a plurality of lamps (two or more lamps) mounted to the light guide, and a lamp controller electrically coupled to the lamps.

The light guide is configured to illuminate the key faces via the lamps. In other words, light from the lamps travels through the light guide and is emitted through the key faces. The lamp controller is configured to repeatedly illuminate the lamps each for a respective on-time interval of a common illumination period. The location of the lamps and the illumination period and each said on-time interval are selected for the visual appearance of continuous substantially uniform illumination of the array of keys.

The average current draw for each lamp is set by the selected illumination period and associated on-time interval. The selected illumination period and associated on-time interval may be such that the apparent intensity of light emitted by each lamp is greater than the apparent intensity would have been if each lamp had continuously drew its average current.

The illumination system may comprise at least one current driver, with a portion of the lamps being electrically coupled to a respective one of the current drivers. The lamp controller may be configured to set the current drawn by each said current driver during each on-time interval to respective magnitudes that facilitate the substantial uniform illumination of the array of keys.

The illumination system may also comprise a plurality of electronic switches, with the lamp controller being electrically coupled to the switches. The illumination system may be configured such that each electronic switch is electrically coupled to at least one of the lamps, and the lamp controller may be configured to open and close each switch in accordance with the respective on-time interval. In one implementation, the lamps are electrically arranged in an array of rows and columns, and each switch corresponds to a respective one of the rows and columns.

The light guide may be substantially planar, with the lamps being disposed substantially uniformly throughout the light guide. Moreover, the array of keys may be part of a keyboard and/or a keypad. Each on-time interval may be between 5% and 25% of the illumination period. For example, each on-time interval may be one of 5%, 6.25%, 8.3%, 12.5% and 25% of the illumination period.

In a second aspect, this patent application describes an electronic communications device. As will be described in further detail below, the communications device comprises an input device, and an illumination controller that is electrically coupled to the input device. The input device provides for manual input of characters and/or commands to the communications device, and comprises at least one key and an illumination system. The illumination system comprises a light guide that is proximate to the at least one key, and a plurality of lamps mounted to the light guide. (Two elements are proximate to each other when they are physically near to each other; the elements may be, but need not be, physically touching, abutting or attached.) The light guide is configured to illuminate the input device via the lamps.

The communications device may also comprise an ambient light sensor for measuring ambient light intensity, and a lamp controller that is electrically coupled to the lamps and the ambient light sensor. The lamp controller may be electrically coupled to the ambient light sensor and may be configured to illuminate the input device in accordance with the measured ambient light intensity.

The lamp controller may also be configured to repeatedly illuminate the lamps each for a respective on-time interval of a common illumination period. The location of the lamps and the illumination period and each on-time interval are selected for the visual appearance of substantial uniform illumination of the input device.

The average current draw for each lamp is set by the selected illumination period and associated on-time interval. The selected illumination period and associated on-time interval may be such that the apparent intensity of light emitted by each lamp is greater than the apparent intensity would have been if each lamp had continuously drew its average current.

The illumination system may also comprise a current driver, with a portion of the lamps being electrically coupled to a respective one of the current drivers. The lamp controller may be configured to set the current drawn by each said current driver during each on-time interval to respective magnitudes that facilitate the substantial uniform illumination of the input device.

The illumination system may comprise a plurality of electronic switches, with the lamp controller being electrically coupled to the switches. The illumination system may be configured such that each electronic switch is electrically coupled to at least one of the lamps, and the lamp controller may be configured to open and close each switch in accordance with the respective on-time interval. In one implementation, the lamps are electrically arranged in an array of rows and columns, and each switch corresponds to a respective one of the rows and columns.

In a third aspect, this patent application describes a method of illuminating an input device of an electronic communications device. As will be described in further detail below, in the method the input device is configured to provide manual input of characters and/or commands to the communications device. The communications device comprises a light guide proximate to the input device, and a plurality of lamps that are mounted to the light guide.

The method comprises repeatedly illuminating the lamps each for a respective on-time interval of a common illumination period. The illumination period and each on-time interval are selected for substantial uniform illumination of the input device.

The average current draw for each lamp is set by the selected illumination period and associated on-time interval. The selected illumination period and associated on-time interval may be such that the apparent intensity of light emitted by each lamp is greater than the apparent intensity would have been if each lamp had continuously drew its average current. The repeated illumination step may comprise illuminating and extinguishing each of the lamps exactly once over the illumination period.

### Communications Device 200

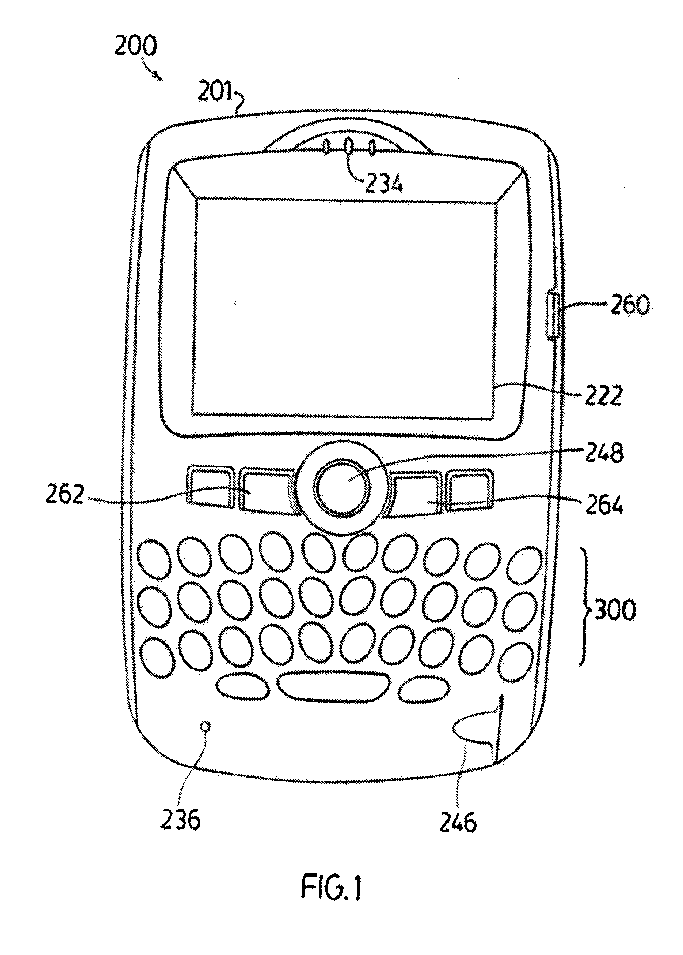

Turning now to Fig. 1, there is shown a sample electronic communications device 200. For purposes of the description that follows, the view provided is Fig. 1 shows some of the upper or front or top features of the electronic communications device 200. Other features described later may be disposed below other features (such as a light guide being positioned below or beneath an array of keys 300, such that the light guide is not generally visible in Fig. 1). The electronic communications device 200 may be a two-way wireless communications device having at least voice and data communication capabilities, and may be configured to operate within a wireless cellular network. Depending on the exact functionality provided, the electronic communications device 200 may be referred to as a data messaging device, a two-way pager, a wireless e-mail device, a cellular telephone with data messaging capabilities, a wireless Internet appliance, a portable computer, or a data communication device, as examples. The electronic communications device may be handheld, that is, sized or shaped to be held or carried in a human hand.

The electronic communications device 200 includes a data processing system (not shown), a communication subsystem 211, a display 222, a user-operable input subsystem (not shown), and various other device subsystems and electronics circuits all disposed within a common housing 201. The data processing system and the input subsystem will be discussed in greater detail below. At this point, however, it is sufficient to point out that the data processing system is in communication with the various device subsystems and controls the overall operation of the device 200.

The display 222 typically comprises a liquid crystal display, and may be implemented as a transmissive liquid crystal display or a trans-reflective liquid crystal display.

The operator of the communications device 200 uses the user input subsystem to provide manual input of data and/or commands to the communications device 200. As shown, the input subsystem comprises one or more input components, such as a power switch 246, a trackball 248 (or optical track pad), a convenience key 260, a "Call" key 262, an "End" key 264, and an illuminated keyboard 300. However, the user input subsystem is not limited to these input devices. For instance, the input components may include a thumbwheel or other pointing device instead of (or in addition to) the trackball 248. Not all input components need be "input devices" (generally having an array of keys, an illumination system and a light guide); but some, such as keyboard 300, may be.

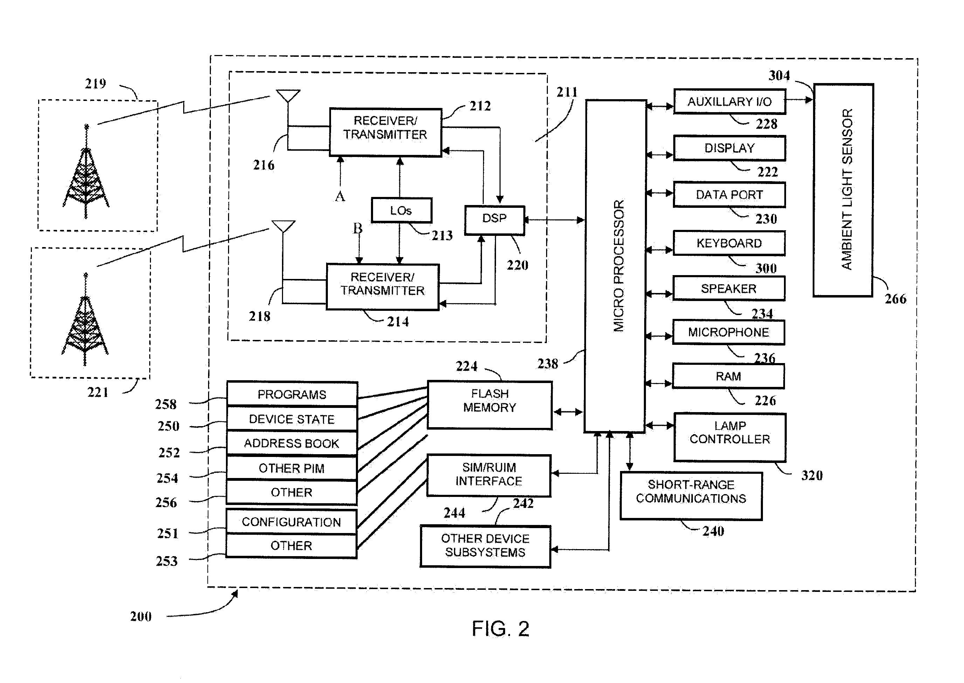

The power switch 246 is used to turn the communications device 200 on and off. The operator of the communications device 200 uses the trackball 248 to select, invoke, terminate and configure the operation of the computer programs 258 (Fig. 2) that are stored on the communications device 200. The convenience key 260 is user programmable and may be used to quickly invoke one of the computer programs 258. The operator of the communications device 200 uses the "Call" key 262 and the "End" key 264 to respectively initiate and terminate voice communications.

The illuminated keyboard 300 will be discussed in greater detail below. At this point, however, it is sufficient to point out that the keyboard 300 may include alphabetic and/or numeric keys, and provides manual input of characters and/or commands to the communications device. The illuminated keyboard 300 may include a light guide that is configured to provide backlighting of the keys via lamps—such as light emitting diode (LED) lamps—that are proximate to the light guide. However, the illuminated keyboard 300 may use other forms of illumination, including side lighting and fluorescent lamps.

### Communications Subsystem 211

Fig. 2 depicts functional details of the electronic communications device 200. The electronic communications device 200 incorporates a motherboard that includes various device subsystems, such as the communication subsystem 211 and the data processing system. The communication subsystem 211 performs communication functions, such as data and voice communications, and includes a primary transmitter/receiver 212, a secondary transmitter/receiver 214, a primary internal antenna 216 for the primary transmitter/receiver 212, a secondary internal antenna 218 for the secondary transmitter/receiver 214, one or more local oscillators (LOs) 213 and one or more digital signal processors (DSP) 220 electrically coupled to the transmitter/receivers 212, 214.

Typically, the communication subsystem 211 sends and receives wireless communication signals over a wireless cellular network via the primary transmitter/receiver 212 and the primary internal antenna 216. Further, typically the communication subsystem 211 sends and receives wireless communication signals over a wireless local area network via the secondary transmitter/receiver 214 and the secondary internal antenna 218.

The primary internal antenna 216 can be configured for use within a Global System for Mobile Communications (GSM) cellular network or a Code Division Multiple Access (CDMA) cellular network. Further, the secondary internal antenna 218 can be configured for use within a WLAN WiFi (IEEE 802.11x) or Bluetooth network. Although the electronic communications device 200 is depicted in Fig. 2 with two antennas, it should be understood that the electronic communications device 200 may instead comprise only a single antenna, with a dual-band antenna being connected to both the primary transmitter/receiver 212 and the secondary transmitter/receiver 214.

Signals received by the primary internal antenna 216 from the wireless cellular network are input to the receiver section of the primary transmitter/receiver 212, which performs common receiver functions such as frequency down conversion, and analog to digital (A/D) conversion, in preparation for more complex communication functions performed by the DSP 220. Signals to be transmitted over the wireless cellular network are processed by the DSP 220 and input to transmitter section of the primary transmitter/receiver 212 for digital to analog conversion, frequency up conversion, and transmission over the wireless cellular network via the primary internal antenna 216.

Similarly, signals received by the secondary internal antenna 218 from the wireless local area network are input to the receiver section of the secondary transmitter/receiver 214, which performs common receiver functions such as frequency down conversion, and analog to digital (A/D) conversion, in preparation for more complex communication functions performed by the DSP 220. Signals to be transmitted over the wireless local area network are processed by the DSP 220 and input to transmitter section of the secondary transmitter/receiver 214 for digital to analog conversion, frequency up conversion, and transmission over the wireless local area network via the secondary internal antenna 218.

The communications device 200 also includes a SIM interface 244 if the electronic communications device 200 is configured for use within a GSM network, and/or a RUIM interface 244 if the electronic communications device 200 is configured for use within a CDMA network. The SIM/RUIM interface 244 is similar to a card-slot into which a SIM/RUIM card can be inserted and ejected. The SIM/RUIM card holds many key configurations 251, and other information 253 including subscriber identification information, such as the International Mobile Subscriber Identity (IMSI) that is associated with the electronic communications device 200, and other subscriber-related information.

In data communication mode, a received text message or web page download will be processed by the communication subsystem 211 and output to the display 222, or alternatively to the auxiliary input/output (I/O) subsystem 228. A user of the electronic communications device 200 may compose data items such as email messages for example, using the keyboard 300. Such composed items may then be transmitted over the wireless cellular network or the local area wireless network through the communication subsystem 211.

For voice communications, overall operation of the electronic communications device 200 is similar, except that received signals may be output to the speaker 234 and signals for transmission would be generated by a microphone 236. Further, the display 222 may provide an indication of the identity of a calling party, the duration of a voice call, or other voice call related information for example.

### Data Processing System

The data processing system interacts with the device subsystems such as the communication subsystem 211, display 222, input subsystem, auxiliary input/output (I/O) subsystem 228, data port 230, speaker 234, microphone 236, short-range communications subsystem 240, and device subsystems 242. The data port 230 may comprise a RS-232 port, a Universal Serial Bus (USB) port or other wired data communication port.

The data processing system comprises an ambient light sensor 266, a microprocessor 238, flash memory 224, and volatile memory (RAM) 226. The ambient light sensor 266 is disposed within the housing 201, and measures ambient light via a small aperture that is provided within the housing 201. The flash memory 224 includes computer processing instructions which, when executed by the microprocessor 238, implement an operating system, computer programs, and operating system specific applications. The operating system comprises an Open Systems Interconnection (OSI) communication protocol stack that allows the electronic communications device 200 to send and receive communication signals over the wireless cellular network 219 and/or the local area wireless network 221. Alternately, the computer processing instructions may be copied from the flash memory 224 into the RAM 226 upon system reset or power-up, and executed by the microprocessor 238 out of the RAM 226.

The flash memory 224 includes both computer program storage 258 and program data storage 250, 252, 254 and 256. Computer processing instructions may also be stored in the flash memory 224 or other similar non-volatile storage. The computer processing instructions, when executed by the microprocessor 238 from the flash memory 224, implement an operating system, computer programs 258, and operating system specific applications. Alternately, the computer processing instructions may be copied from the flash memory 224 into the RAM 226 upon system reset or power-up, and executed by the microprocessor 238 out of the RAM 226. The computer processing instructions may be installed onto the electronic communications device 200 upon manufacture, or may be loaded through the cellular wireless network, the auxiliary I/O subsystem 228, the data port 230, the short-range communications subsystem 240, or the device subsystem 242.

The operating system comprises an Open Systems Interconnection (OSI) communication protocol stack that allows the electronic communications device 200 to send and receive information over the wireless cellular network and/or the local area wireless network. The operating system also allows the electronic communications device 200 to facilitate communication between the communication subsystem 211, input subsystem, display 222, auxiliary input/output (I/O) subsystem 228, data port 230, speaker 234, microphone 236, short-range communications subsystem 240, and device subsystems 242.

Typically, the computer programs 258 include communication software that allows the electronic communications device 200 to receive one or more communication services. For instance, the communication software may include internet browser software, SMS message and e-mail software, telephone software and map software that respectively allow the electronic communications device 200 to communicate with various computer servers over the Internet, send and receive messages/e-mail, initiate and receive telephone calls, and view electronic maps. The computer programs 258 may also include application software, such as calendar software which diarizes due dates and/or appointments of importance to the user, and/or task management software which tracks of the status of tasks of importance to the user.

The computer programs 258 may include a lamp controller procedure 320. The operation of the lamp controller 320 will be discussed in greater detail below. However, it is sufficient at this point to note that the lamp controller 320 is configured to repeatedly illuminate the lamps of the illuminated keyboard 300 each for a respective on-time interval of a common illumination period. In other words, the lamps are illuminated in a repeating cycle, and the illumination period is the period or length of time of the cycle. Each individual lamp is illuminated for part of the illumination period, and the length of time that each individual lamp is illuminated is the lamp's on-time interval. All lamps have the same illumination period, but each lamp has its own on-time interval (which may be, but need not be, of the same duration as an on-time interval of another lamp). The lamp controller 320 may also be configured to monitor the ambient light intensity via the ambient light sensor 262 and to adjust the intensity of the light emitted by the lamps of the illuminated keyboard 300 based on the ambient light intensity.

It should also be understood that although the computer programs 258 may be implemented as a set of computer processing instructions, the functionality of the computer programs 258 (such as the lamp controller 320) may be implemented in electronics hardware instead.

### Illuminated Keyboard 300

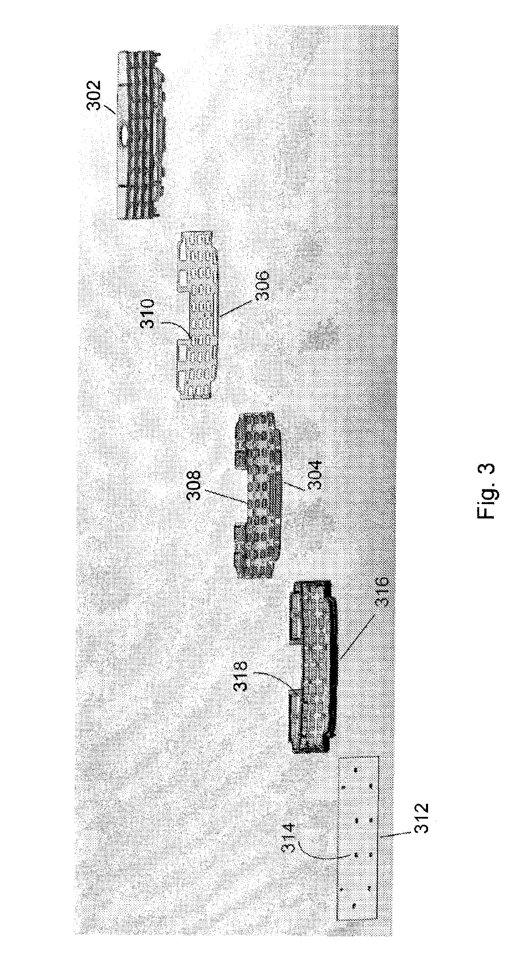

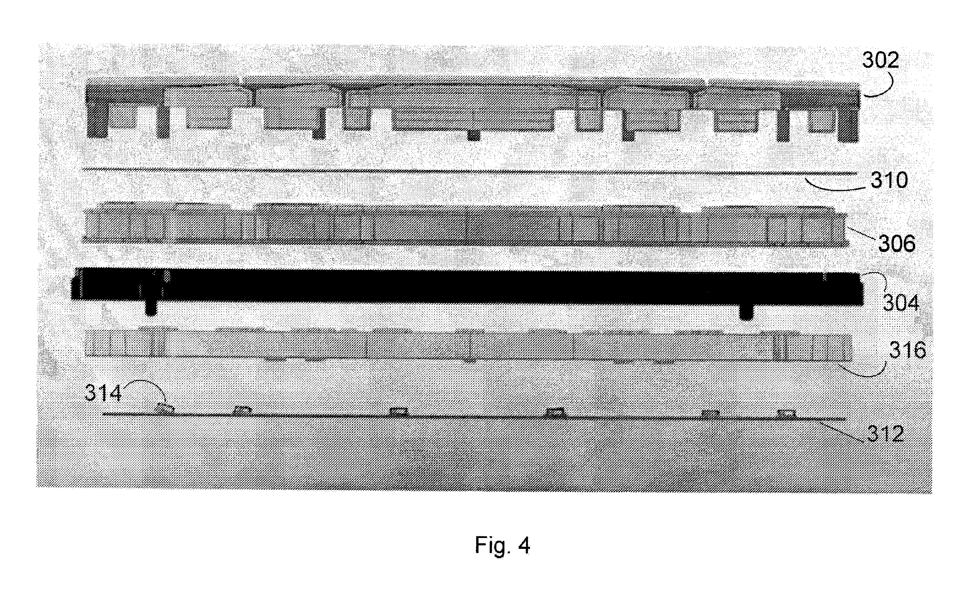

Figs. 3 and 4 depict a sample embodiment of the illuminated keyboard 300. As shown, the illuminated keyboard 300 comprises a plurality of keys, and an illumination system (not necessarily shown in its entirety in Figs. 3 and 4) that is proximate to the keys. The illuminated keyboard 300 may comprise a key layer 302 that includes an array of the keys, typically arranged as a keyboard or keypad, and a continuous web that joins the keys together. Each key may be substantially dome-shaped, and comprises a key face and a side wall that is disposed below the key face. The key layer may be fabricated from a translucent or transparent material, such as plastic, and each key face may be configured for the transmission of light.

The illuminated keyboard 300 also comprises a resilient under-layer 304, and a spacer 306 that is disposed between the key layer 302 and the resilient under-layer 304. The resilient under-layer 304 is configured for the transmission of light, and includes a plurality of resilient dome-shaped regions 308 and a continuous web that joins the dome-shaped regions 308 together. Each dome-shaped region 308 is configured to be received within a respective one of the keys and provides a "click" response when the associated key is pressed downwards. The resilient under-layer 304 also includes a plurality of electronic switches that are embedded in the dome-shaped region 308 and are used by the data processing system to identify the keys that are pressed. The spacer 306 is opaque, and includes a plurality of apertures 310, each configured to receive a respective one of the dome-shaped regions 308.

The illumination system comprises a light guide 312, and a plurality of lamps 314 that are mounted to the light guide 312. The lamps may be mounted in any fashion (such as mechanically or by adhesive) that holds the lamps 314 in a substantially fixed position with respect to the light guide 312. The illumination system may also comprise a light gasket 316 that is mounted on the light guide 314, below the resilient under-layer 304, and directs light emitted from the lamps 314 upwards towards the resilient under-layer 304. The light gasket 316 includes a plurality of recesses 318, each vertically aligned with a respective lamp 314, that are configured to receive a respective lamp 314.

The illumination system may also include the aforementioned lamp controller 320. Although the lamp controller 320 may be implemented as a computer program, the lamp controller 320 may be implemented in electronics hardware, such as a Field Programmable Gate Array (FPGA) or a Complex Program Logic Device (CPLD).

The light guide 312 is configured to illuminate the keys of the keyboard 300 via the lamps 314. The light guide 312 may be configured to illuminate the faces of the keys. The light guide 312 is disposed below the key layer 302, and the lamps 314 are mounted to the light guide 312. The light guide 312 may be substantially planar, and may include protrusions that deflect the light emitted from the lamps 314 upwards towards the keys.

The lamps 314 may be positioned relative to the light guide 312 so as to facilitate substantial uniform illumination of the keyboard 300 (i.e. all the key faces appear to be illuminated at the same intensity). Accordingly, the light guide 312 may include a plurality of equidistantly-spaced mounting holes (not shown), with the lamps 314 being mounted to the light guide 312 via the mounting holes. With this configuration, the lamps 314 are positioned substantially equidistantly throughout the light guide 312, and the light guide 312 and the lamps 314 together comprise a backlight. Alternately, the lamps 314 may be positioned equidistantly on one or more edges of the light guide 312, such that the light guide 312 and the lamps 314 together comprise an edgelight.

To reduce the power consumption of the illumination system, the lamps 314 may comprise low-power lamps. Typically, the low-power lamps 314 comprise light-emitting diodes (LEDs), such as white or green LEDs. However, the illumination system may include other types of low power lamps, including fluorescent lamps. The light guide 306 may be provided with a sufficient number of lamps 314 to facilitate substantial uniform illumination of the array of keys.

### Sample Embodiments of Illumination System

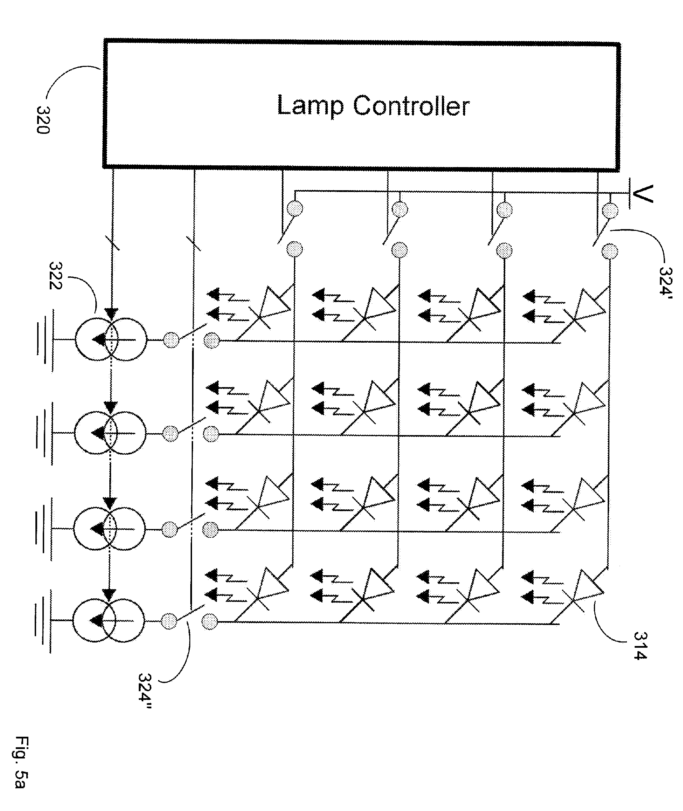

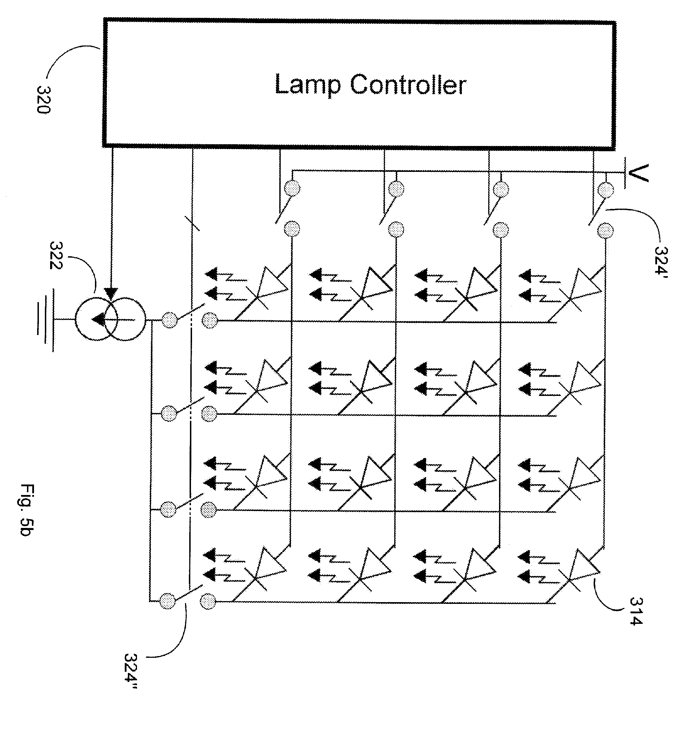

Figs. 5a and 5b depict the electrical configuration of two sample embodiments of the illumination system. In each embodiment, the lamp controller 320 is shown being electrically coupled to the lamps 314, and is configured to repeatedly illuminate the lamps 314 each for a respective on-time interval of a common illumination period. As will be explained shortly, the on-time intervals during which each lamp 314 is illuminated, and the illumination period are selected to facilitate the visual appearance of continuous substantially uniform illumination of the array of keys (i.e. all the key faces appear to be continuously illuminated with the same backlight intensity). Further, the on-time intervals and illumination period may be selected to provide consistent illumination from key face to key face. As will be illustrated below, on-time intervals (which may include not only duration or magnitude but their relative timing or staggering with respect to one another) and illumination period may dependent upon the number of lamps, the arrangement of the array of keys, characteristics of the illumination system (such as the geometry of the light guide), the circuitry used to control illumination of the lamps, or any combination thereof.

Further, as will be apparent, since the on-time interval during which each lamp 314 is on is a fraction of the illumination period, the average current draw for each lamp 314 is a function of the associated on-time interval and the illumination period. The on-time intervals and the illumination period may take advantage of the Broca-Sulzer effect and, therefore are selected such that the apparent intensity of light emitted by each lamp 314 is greater than if each lamp 314 continuously drew its average current.

The illumination system may also comprise a plurality of electronic switches 324 coupled to the lamps 314. To reduce the number of electrical conductors required, the lamps 314 may be electrically arranged in an array of rows and columns of the lamps 314, and the switches 324 may be arranged in an array of row switches 324' and/or column switches 324". Regardless of the arrangement of the switches 324, the lamp controller 320 is electrically coupled to the gate inputs of the switches 324 and is configured to turn each lamp 314 on for its associated on-time interval by closing the associated switch(es) 324 for the associated on-time interval, and by opening the associated switch(es) 324 for the remainder of the illumination period. The electronic switches 324 may be implemented as part of the same electronic component as the lamp controller 320, or as a separate electronic component.

In addition to the lamps 314, the switches 324 and the lamp controller 320, the illumination system may also include one or more current drivers 322, which may be configured as current sinks and/or current sources. To facilitate the performance of special visual effects (such as fading in or fading out), the illumination system may include a plurality of the current drivers 322, each electrically coupled to a respective number of the lamps 314. Alternately, the illumination system may include only a single current driver 322, with all of the lamps 314 being electrically coupled to the same current driver 322.

In the embodiment shown in Fig. 5a, the lamps 314 are arranged in rows and columns, and the switches 324 are arranged in rows and columns. All of the row switches 324' are electrically coupled to a common power source, and each row switch 324' is electrically coupled to the lamps 314 in the associated row of lamps 314. Each column switch 324" is electrically coupled to the lamps 314 in the associated column of lamps 314. The illumination system includes a plurality of current drivers 322 each electrically coupled to a respective one of the columns of lamps 314, and each column switch 324" is connected to a respective one of the current drivers 322. As shown, each current driver 322 may be configured as a current sink, connected between ground (i.e., a reference node, which may be but need not be earth potential) and a respective column of lamps 314 via a respective column switch 324".

In the embodiment shown in Fig. 5b, the lamps 314 are arranged in rows and columns, and the switches 324 are arranged in rows and columns. All of the row switches 324' are electrically coupled to a common power source, and each row switch 324' is electrically coupled to the lamps 314 in the associated row of lamps 314. Each column switch 324" is electrically coupled to the lamps 314 in the associated column of lamps 314. In contrast to the embodiment of Fig. 5a, the illumination system includes a single current driver 322 electrically coupled to all of the columns of lamps 314, and each column switch 324" is connected to the same current driver 322. As shown, the current driver 322 may be configured as a current sink, connected between ground and each of the columns of lamps 314 via the associated column switches 324".

Two exemplary illumination patterns are envisaged for the illumination systems of Figs. 5a and 5b. With one illumination pattern, the lamp controller 320 closes each row switch 324' for 1/4 of the illumination period (and opens the row switch 324' for the remainder of the illumination period), with the row switch closings being staggered such that each row switch 324' is closed for 1/4 of the illumination period, or 90 degrees, after the previous row switch 324' is closed. Further, the lamp controller 320 closes each column switch 324" for 1/16 of the illumination period (and opened for the remainder of the illumination period), but with the column switch closings being staggered such that each column switch 324" is closed for 1/16 of the illumination period, or 22.5 degrees, after the previous column switch 324" is closed.

With another illumination pattern, the lamp controller 320 closes each column switch 324" for 1/4 of the illumination period (and opens the column switch 324" for the remainder of the illumination period), but with the column switch closings being staggered such that each column switch 324 is closed for 1/4 of the illumination period, or 90 degrees, after the previous column switch 324" is closed. Further, the lamp controller 320 closes each row switch 324' for 1/16 of the illumination period (and opened for the remainder of the illumination period), with the row switch closings being staggered such that each row switch 324' is closed for 1/16 of the illumination period, or 22.5 degrees, after the previous row switch 324' is closed.

As will be appreciated, a lack of uniformity in the thickness and dimensions of the light guide 312 may cause a lack of consistency in the illumination of the array of keys. To account for this lack of uniformity in the manufacture of the light guide 312, each current driver 322 may comprise an adjustable current driver (such as an analog adjustable current sink or current source), and the intensity of light produced by each lamp 314 may be varied by adjusting the magnitude of current drawn/provided by the adjustable current driver 322 to take into account the lack of uniformity of the light guide 312. Alternately, the intensity of light produced by each lamp 314 may be varied by adjusting the respective on-time interval of each lamp 314. Therefore, rather than the instantaneous current draw being the same during each on-time interval, the lamp controller 320 may be configured to set the current drawn/provided by the adjustable current driver 322 during the on-time interval that the associated row/column switch 324 is closed, to respective magnitudes that facilitate the visual appearance of substantial uniform illumination of the array of keys.

Further, as discussed, the lamp controller 320 may be electrically coupled to the ambient light sensor 262, and may be configured to monitor the ambient light intensity via the ambient light sensor 262 and to adjust the intensity of the light emitted by the lamps 314 based on the ambient light intensity. Therefore, the lamp controller 320 may be configured to turn the lamps 314 on if the ambient light intensity is less than a threshold level, and to otherwise extinguish the lamps 314. This latter functionality can be achieved by the lamp controller 320 opening all of the switches 324, or by the lamp controller 320 turning the adjustable current drivers 322 off, if the ambient light intensity is greater than a threshold level.

Alternately, the lamp controller 320 may be configured to adjust the intensity of the light emitted by the lamps 314 as a continuous linear or non-linear function of the ambient light intensity. Although this functionality can be achieved using pulse-width modulation of the on-time interval during which each switch 324 is closed, a change in the time interval can reduce or terminate the Broca-Sulzer effect. Therefore, to continue to take advantage of the Broca-Sulzer effect, this functionality can be achieved by the lamp controller 320 maintaining the on-time intervals and the illumination period constant, and varying the current drawn/provided by the adjustable current driver 322 based on the ambient light intensity.

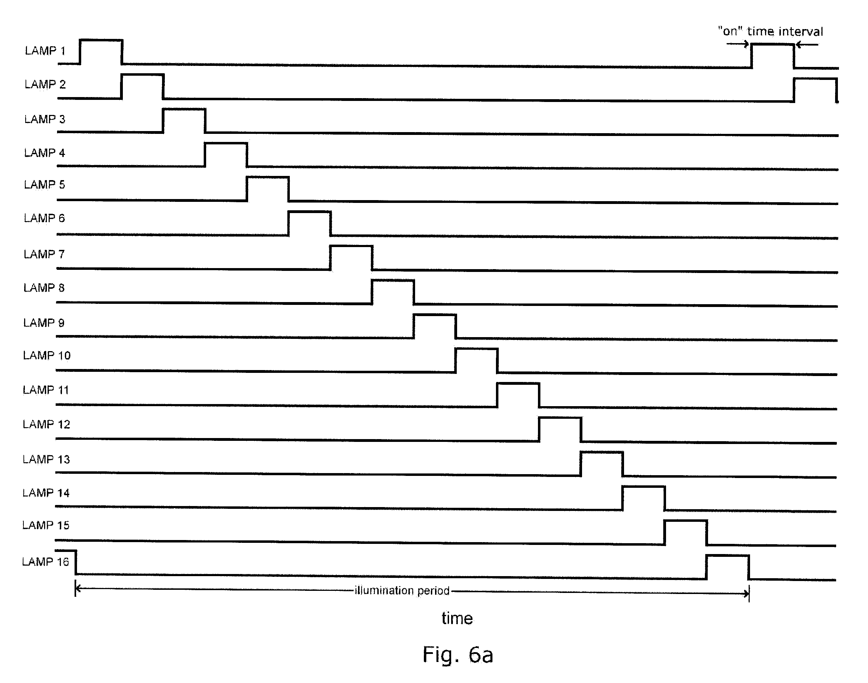

Fig. 6a is a timing diagram that depicts an illustrative operation of the illumination system of Fig. 5a. For the purpose of this example, the illumination system comprises sixteen (16) lamps 314 (arranged in an array of four rows and four columns), sixteen (16) switches 324 (arranged in an array of four column switches and four row switches), and four (4) current sinks 322.

The lamp controller 320 closes and then opens each row/column switch pair 324'/324" once throughout the illumination period, thereby illuminating each lamp 314 once throughout the illumination period. However, the on-time interval during which each lamp 314 is on is substantially the same for each lamp 314. Therefore, the on-time interval during which each lamp 314 is turned on is 1/16 of the illumination period, thereby illuminating each lamp 314 with a duty cycle ("illumination duty cycle) of 6.25%. Moreover, each lamp 314 is turned on 1/16 of the illumination period, or 22.5 degrees, alter the previous lamp 314 was turned on.

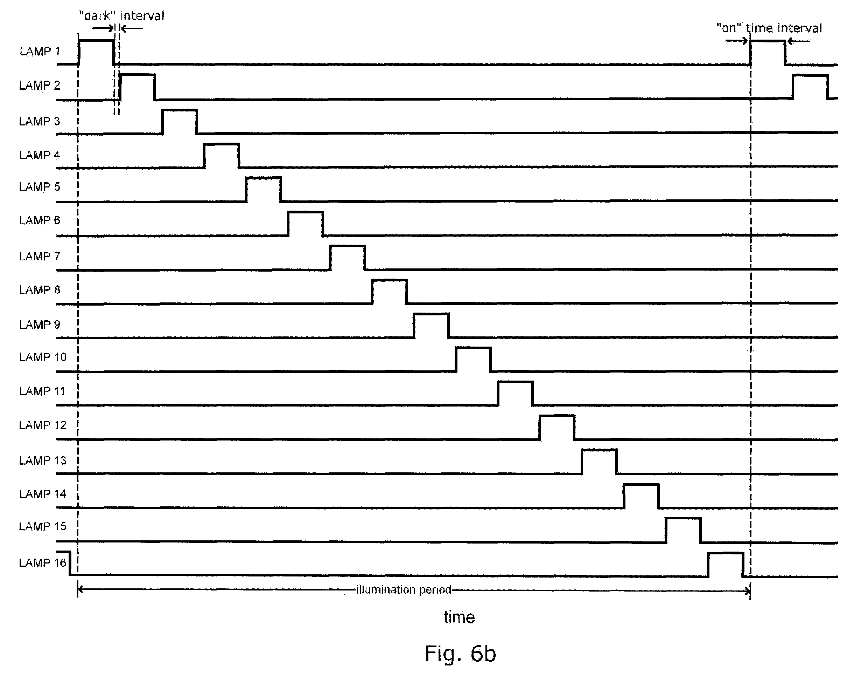

Fig. 6b is a timing diagram that depicts the operation of the illumination system of Fig. 5b. For the purpose of this latter example, the illumination system comprises sixteen (16) lamps 314 (arranged in an array of four rows and four columns), sixteen (16) switches 324 (arranged in an array of four (4) column switches and four (4) row switches), and one (1) current sink 322. Again, the lamp controller 320 closes each row/column switch pair 324'/324" once throughout the illumination period, thereby illuminating each lamp 314 once throughout the illumination period. Again, the on-time interval during which each lamp 314 is on is substantially the same for each lamp 314.

As discussed, the lamp controller 320 may set the current drawn by the adjustable current sink 322, during the on-time interval that one of column switches 324 is closed, to respective magnitudes that facilitate the visual appearance of substantial uniform illumination of the array of keys. However, since the adjustable current sink 322 may have a non-zero set-up time to change the required magnitude of current for each on-time interval, a "dark" interval is added at the end of each on-time interval during which none of the lamps 314 are on.

In this variation, in contrast to the embodiment of Fig. 5a, the lamp controller 320 does not extinguish the active lamp 314 simply by opening the row/column switch pair 324'/324". Instead, at the end of each on-time interval the lamp controller 320 extinguishes the active lamp 314 by setting the current drawn by the current sink 322 to 0mA. During the "dark" interval (at least equal to the set-up time of the current sink 322), the lamp controller 320 opens the switches 324 that are associated with the extinguished lamp 314, closes the switches 324 that are associated with the next lamp 314 to turn on, and sets the magnitude of current drawn by the current sink 322 to that required for the next lamp 314. To allow for the set-up time of the current sink 322, each lamp 314 is illuminated with an illumination duty cycle of 5% of the illumination period, and the "dark" period is 1.25% of the illumination period. As in Fig. 6a, however, each lamp 314 is turned on 1/16 of the illumination period, or 22.5 degrees, after the previous lamp 314 was turned on.

In the example timing diagrams of Figs. 6a and 6b, the lamp controller 320 may be configured with an illumination frequency of 60 Hz (which is mathematically equivalent to an illumination period of about 17 ms, the illumination frequency in cycles per unit time being the inverse of the illumination period in units of time per cycle). At this illumination frequency, the keyboard 300 appears to be substantially continuously and substantially uniformly illuminated, when viewed by a human being. In other words, the illumination period is so brief (or the illumination frequency is sufficiently high) that a human being perceives the illumination as substantially constant and does not generally perceive any flicker in the illumination, even though the light emitted from each key face is going on and off. Moreover, the illumination duty cycle may be between 5% and 6.25%. Using these parameters, due to the Broca-Sulzer effect the apparent intensity of light emitted by each lamp 314 is greater than if each lamp 314 continuously drew its average current. As a result, the power required to illuminate the keyboard 300 with a given apparent lamp intensity light is less than if the current drawn by each lamp 314 was continuous.

To provide an illumination frequency of 60 Hz and illumination duty cycle of 6.25%, the lamp controller 320 of Fig. 5a or 5b may be configured to scan the row switches 324 at a frequency of 60 Hz and duty cycle of 25% (i.e. close the same row switch 324 every 16.7 ms for 4.1 ms), and to scan the column switches 324 at a frequency of 240 Hz and duty cycle of 25% (i.e. close the same column switch 324 every 4.1 ms for 1 ms). Alternately, the lamp controller 320 may be configured to scan the column switches 324 at a frequency of 60 Hz and duty cycle of 25%, and to scan the row switches 324 at a frequency of 240 Hz and duty cycle of 25%.

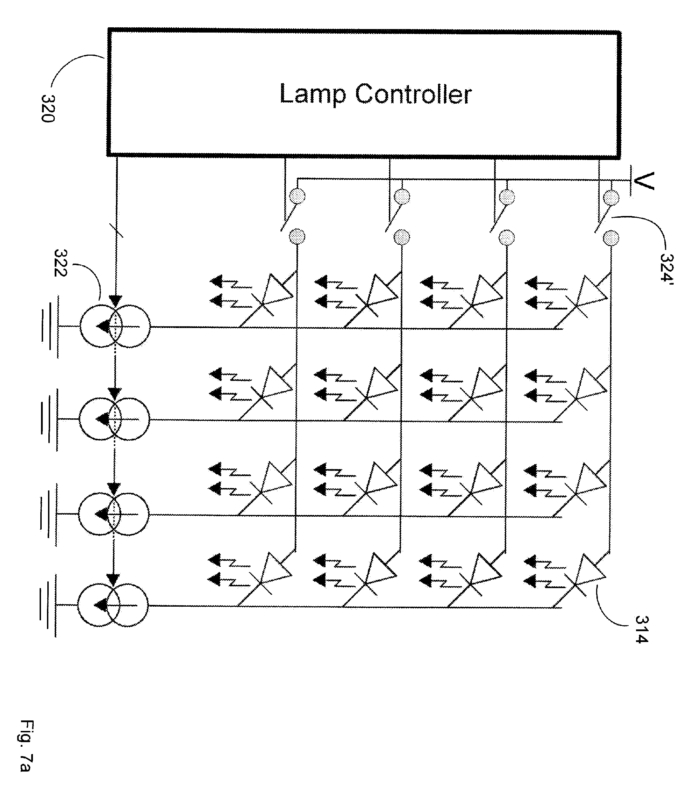

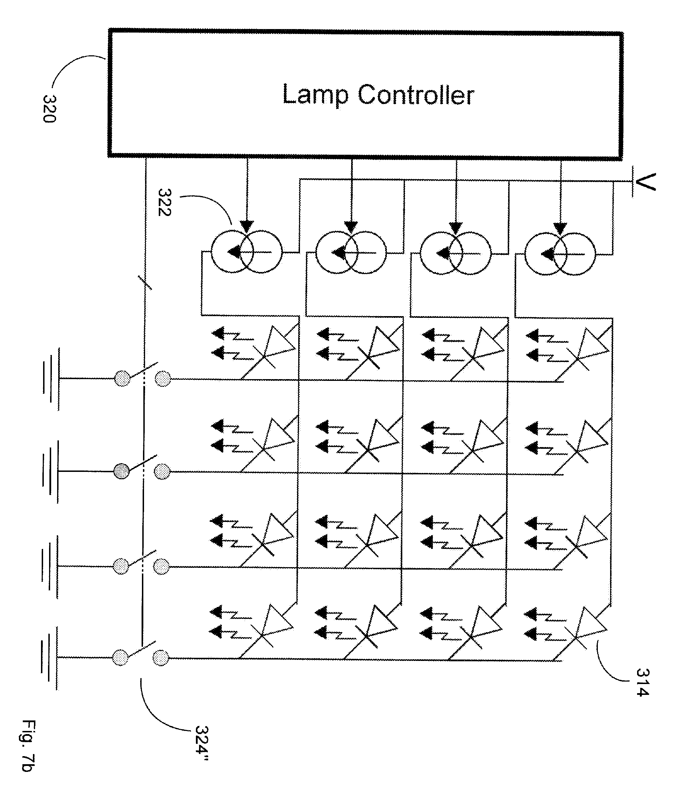

Other embodiments of the illumination system are envisaged. Two additional embodiments of the illumination system are depicted in Figs. 7a and 7b. In each of these latter two embodiments, the lamp controller 320 is again electrically coupled to the lamps 314, and is configured to repeatedly illuminate the lamps 314 each for a respective on-time interval of a common illumination period. The on-time intervals during which each lamp 314 is illuminated, and the illumination period are again selected to facilitate the visual appearance of \ substantially uniform illumination of the array of keys. Moreover, the on-time intervals and the illumination period may take advantage of the Broca-Sulzer effect and, therefore are selected such that the apparent intensity of light emitted by each lamp 314 is greater than if each lamp 314 continuously drew its average current.

As in the embodiments of Figs. 5a and 5b, the illumination system of Figs. 7a and 7b comprises a plurality of lamps 314. However, in contrast to Figs. 5a and 5b, the lamps 314 are arranged in one or more rows or one or more columns, and the switches 324 (if present) are connected either to the rows or to the columns of the lamps 314. Further, in contrast to the embodiment of Fig. 5a, the on-time interval during which each lamp 314 is illuminated may be controlled by varying the magnitude of lamp current via the adjustable current drivers 322.

In the embodiment shown in Fig. 7a, all of the switches 324 comprise row switches 324' that are connected to a common power source, and each row switch 324' is electrically coupled to the lamps 314 in the associated row of lamps 314. The illumination system includes a plurality of current drivers 322, each electrically coupled to a respective one of the columns of lamps 314. As shown, each current driver 322 may be configured as a current sink, connected directly between ground and a respective column of lamps 314. However, in one variation, the lamps 314 are arranged in a single row or a single column, and the illumination system does not include any row or column switches 324.

In the embodiment shown in Fig. 7b, all of the switches 324 comprise column switches 324" that are connected to ground, and each column switch 324" is electrically coupled to the lamps 314 in the associated column of lamps 314. The illumination system includes a plurality of current drivers 322, each electrically coupled to a respective one of the rows of lamps 314. As shown, each current driver 322 may be configured as a current source, connected directly between a common power source and a respective row of lamps 314. Again, in one variation, the lamps 314 are arranged in a single row or a single column, and the illumination system does not include any row or column switches 324.

Four exemplary illumination patterns are envisaged for the illumination systems of Figs. 7a and 7b. For a first illumination pattern, the illumination system comprises sixteen (16) lamps 314 (arranged, for example, in an array of four (4) rows and four (4) columns), four (4) row switches 324', and four (4) current sinks 322. Alternately, the illumination system comprises four (4) column switches 324" and four (4) current sources 322. The lamp controller 320 closes each row switch 324' (or each column switch 324") for 1/4 of the illumination period, and opens the row switch 324' (or the column switch 324") for the remainder of the illumination period, with the switch closings being staggered such that each row switch 324' (column switch 324") is closed for 1/4 of the illumination period, or 90 degrees, after the previous row switch 324' (column switch 324") is closed. As a result, the row/column switch scan duty cycle is 25%.

Further, the lamp controller 320 activates (turns on) the current sink/source 322 for each row/column of lamps 314 for 1/16 of the illumination period (and then deactivates or turns off the current sink/source 322 for the remainder of the illumination period), but with the current sink/source 322 activations being staggered such that each current sink/source 322 is activated 1/16 of the illumination period, or 22.5 degrees, after the previous current sink/source 322 is activated.

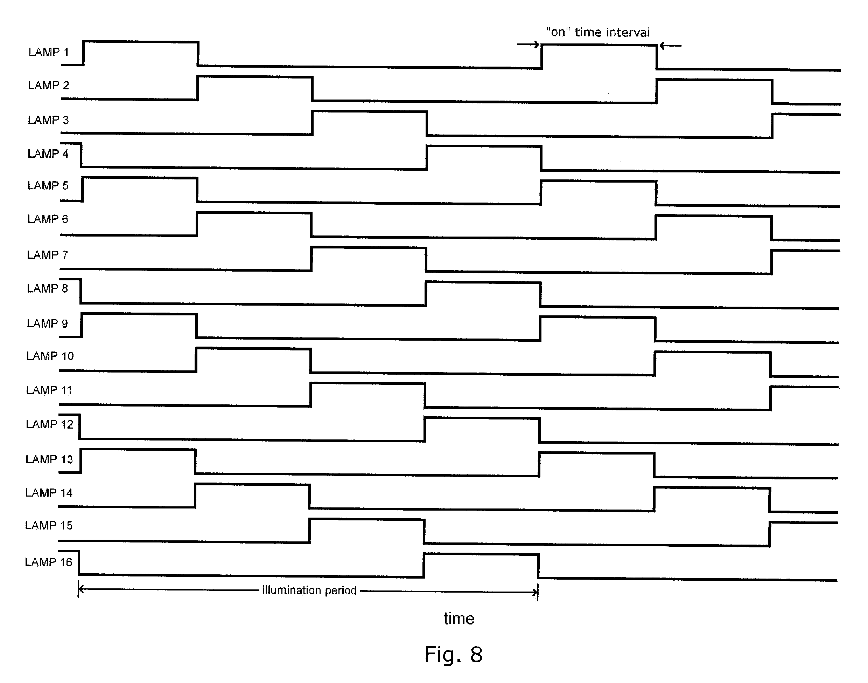

Fig. 8 is a timing diagram that depicts the operation of the illumination system of Fig. 7a or 7b, when configured with the first illumination pattern. The lamp controller 320 closes and then opens each row/column switch 324'/324" once throughout the illumination period, thereby illuminating each lamp 314 once throughout the illumination period. However, the on-time interval during which each lamp 314 is on is substantially the same for each lamp 314. Therefore, the on-time interval during which each lamp 314 is turned on is 1/16 of the illumination period, thereby illuminating each lamp 314 with a duty cycle ("illumination duty cycle") of 6.25%.

To implement this first illumination pattern, the lamp controller 320 may be configured to scan the row/column switches 324'/324" at a frequency of 64 Hz and a row/column switch scan duty cycle of 25% (i.e. close each row/column switch 324'/324" once every 62.5 ms for 15.6 ms), and to scan the current sink/sources 322 at a frequency of 256 Hz and a duty cycle of 25% (i.e. activate each current sink/source 322 once every 15.6 ms for 3.9 ms).

For a second illumination pattern, the illumination system comprises twelve (12) lamps 314 (arranged, for example, in an array of three (3) rows and four (4) columns), three (3) row switches 324', and four (4) current sinks 322. Alternately, the illumination system may comprise twelve (12) lamps 314 (arranged, for example, in an array of four (4) rows and three (3) columns), three (3) column switches 324" and four (4) current sources 322. The lamp controller 320 closes each row switch 324' (or each column switch 324") for 1/3 of the illumination period, and opens the row switch 324' (or the column switch 324") for the remainder of the illumination period, with the switch closings being staggered such that each row switch 324' (column switch 324") is closed for 1/3 of the illumination period, or 120 degrees, after the previous row switch 324' (column switch 324") is closed. As a result, the row/column switch scan duty cycle is 33%.

Further, the lamp controller 320 activates (turns on) the current sink/source 322 for each row/column of lamps 314 for 1/12 of the illumination period (and then deactivates or turns off the current sink/source 322 for the remainder of the illumination period), but with the current sink/source 322 activations being staggered such that each current sink/source 322 is activated 1/12 of the illumination period, or 30 degrees, after the previous current sink/source 322 is activated. Therefore, the on-time interval during which each lamp 314 is turned on is 1/12 of the illumination period, thereby illuminating each lamp 314 with an illumination duty cycle of 8.3%.

To implement this second illumination pattern, the lamp controller 320 may be configured to scan the row/column switches 324'/324" at a frequency of 85 Hz and a row/column switch scan duty cycle of 33% (i.e. close each row/column switch 324'/324" once every 35.2 ms for 11.7 ms), and to scan the current sink/sources 322 at a frequency of 340 Hz and a duty cycle of 25% (i.e. activate each current sink/source 322 once every 11.7 ms for 2.9 ms). Alternately, the scan frequency and duty cycle of the row/column switches 324'/324" may be exchanged for those of the current sink/sources 322.

For a third illumination pattern, the illumination system comprises eight (8) lamps 314 (arranged, for example, in an array of two (2) rows and four (4) columns), two (2) row switches 324', and four (4) current sinks 322. Alternately, the illumination system may comprise eight (8) lamps 314 (arranged, for example, in an array of four (4) rows and two (2) columns), two (4) column switches 324" and four (4) current sources 322. The lamp controller 320 closes each row switch 324' (or each column switch 324") for 1/2 of the illumination period, and opens the row switch 324' (or the column switch 324") for the remainder of the illumination period, with the switch closings being staggered such that each row switch 324' (column switch 324") is closed for 1/2 of the illumination period, or 180 degrees, after the previous row switch 324' (column switch 324") is closed. As a result, the row/column switch scan duty cycle is 50%.

Further, the lamp controller 320 activates (turns on) the current sink/source 322 for each row/column of lamps 314 for 1/8 of the illumination period (and then deactivates or turns off the current sink/source 322 for the remainder of the illumination period), but with the current sink/source 322 activations being staggered such that each current sink/source 322 is activated 1/8 of the illumination period, or 45 degrees, after the previous current sink/source 322 is activated. Therefore, the on-time interval during which each lamp 314 is turned on is 1/8 of the illumination period, thereby illuminating each lamp 314 with an illumination duty cycle of 12.5%.

To implement this third illumination pattern, the lamp controller 320 may be configured to scan the row/column switches 324'/324" at a frequency of 128 Hz and a row/column switch scan duty cycle of 50% (i.e. close each row/column switch 324'/324" once every 7.8 ms for 3.9 ms), and to scan the current sink/sources 322 at a frequency of 512 Hz and a duty cycle of 25% (i.e. activate each current sink/source 322 once every 3.9 ms for 0.9 ms). Alternately, the lamp controller 320 may be configured to scan the current sink/sources 322 at a frequency of 32 Hz and a duty cycle of 25% (i.e. activate each current sink/source 322 once every 31.2 ms for 7.8 ms), although this latter scan rate may produce flicker noticeable to a human being. Further, the scan frequency and duty cycle of the row/column switches 324'/324" may be exchanged for those of the current sink/sources 322.

For a fourth illumination pattern, the illumination system comprises four (4) lamps 314 (arranged, for example, in an array of one row and four columns), four (4) current sinks 322, and no switches 324. Alternately, the illumination system may comprise four (4) lamps 314 (arranged, for example, in an array of four rows and one column), four (4) current sources 322, and no switches 324. The lamp controller 320 activates (turns on) the current sink/source 322 for each lamp 314 for 1/4 of the illumination period (the period required to illuminate four lamps 314 in succession), and then deactivates or turns off the current sink/source 322 for the remainder of the illumination period, but with the current sink/source 322 activations being staggered such that each current sink/source 322 is activated for 1/4 of the illumination period, or 90 degrees, after the previous current sink/source 322 is activated. Therefore, the on-time interval during which each lamp 314 is turned on is 1/4 of the illumination period, thereby illuminating each lamp 314 with an illumination duty cycle of 25%.

To implement this fourth illumination pattern, the lamp controller 320 may be configured to scan the current sink/sources 322 at a frequency of 64 Hz and a duty cycle of 25% (i.e. activate each current sink/source 322 once every 15.6 ms for 3.9 ms).

With each of these latter four illumination patterns, the keyboard 300 appears to be continuously uniformly illuminated when each of the specified illumination period/frequency and duty cycle is used. Moreover, due to the Broca-Sulzer effect the apparent intensity of light emitted by each lamp 314 is greater than if each lamp 314 continuously drew its average current. Therefore, the power required to illuminate the keyboard 300 with a given apparent lamp intensity light is less than if the current drawn by each lamp 314 was continuous.

With each of these latter four illumination patterns, the intensity of light produced by each lamp 314 may be varied by adjusting the respective on-time interval during which each lamp 314 is on, or by adjusting the magnitude of current drawn/provided by each current sink/source 322, to take into account the lack of uniformity of the light guide 312. Therefore, rather than the instantaneous current draw being the same during each on-time interval, the lamp controller 320 may be configured to set the current drawn/provided by the current sink/source 322 during each on-time interval that the associated lamp 314 is illuminated, to respective magnitudes that facilitate the visual appearance of substantial uniform illumination of the array of keys.

In the latter four examples, the lamps 314 were illuminated at an illumination frequency and illumination duty cycle of 256 Hz and 6.25%, respectively (row/column switch scan frequency and duty cycle of 64 Hz and 25%, respectively); illumination frequency and illumination duty cycle of 340 Hz and 8.3%, respectively (row/column switch scan frequency and duty cycle of 85 Hz and 33%, respectively); illumination frequency and illumination duty cycle of 512 Hz (or 128 Hz, subject to possibility of flicker) and 12.5%, respectively (row/column switch scan frequency and duty cycle of 128 Hz and 50%, respectively); and illumination frequency and illumination duty cycle of 64 Hz and 25%, respectively (0 Hz row/column switch scan frequency). However, it is expected that other illumination frequencies and illumination duty cycles may be advantageous.

One or more benefits may be realized from implementation of one or more of the above embodiments. Some of those advantages have been mentioned previously. Some of the embodiments may produce saving of space, simplicity of circuitry, conservation of power or other benefits that may be of notable concern for handheld devices that may have limited space, weight and power supplies. In addition, some embodiments may provide aesthetic benefits in that the illumination of each key face appears substantially continuous and uniform, and in that the illumination from key face to key face may appear substantially consistent in spite of variations in the components of the illumination system.

A further potential advantage of the described concepts is adaptability. The concepts may be applied to a variety of electronic devices. The concepts may be applied to devices having different numbers of keys and lamps, as well as different arrangements of the keys and lamps. Further, different illumination periods and on-time intervals may be selected for each system, applying some techniques illustrated above, to produce an illumination that is substantially continuous and uniform, and consistent from one key face to another.

The scope of the monopoly desired for the invention is defined by the claims appended hereto, with the foregoing description being merely illustrative of the embodiments of the invention. Notably, although many arrays of keys or arrangements of lamps have been described in terms of rows and columns, the concepts described herein may be applied to arrays or arrangements that are not in columns, not in rows, or in neither columns nor rows. Further, as indicated above, many of the units and quantities expressed herein could be mathematically converted to other units and quantities (e.g., a degree measurement could be converted to a radian measurement, or a time period could be expressed in terms of frequency). Accordingly, selecting an illumination period may be accomplished by, for example, selecting an illumination frequency; and selecting an on-time interval may include selecting a duty cycle. Persons of ordinary skill may envisage modifications to the described embodiment which, although not explicitly suggested herein, do not depart from the scope of the invention, as defined by the appended claims.

## Claims

1. An input device comprising:
an array of keys each comprising a key face configured for transmission of light; and
an illumination system comprising:
a light guide disposed below the keys,
a plurality of lamps mounted to the light guide, and
a lamp controller electrically coupled to the lamps,
the light guide being configured to illuminate the key faces via the lamps, the lamp controller being configured to repeatedly illuminate the lamps each for a respective on-time interval of a common illumination period, the location of the lamps and the illumination period and each said on-time interval being selected for visual appearance of substantially continuous and substantially uniform illumination of the array of keys.

2. The input device according to Claim 1, wherein the selected illumination period and on-time intervals set an associated average current draw for each said lamp, and an apparent intensity of light emitted by each said lamp is greater than if each said lamp continuously drew said average current.

3. The input device according to any preceding claim, wherein the illumination system comprises at least one adjustable current driver, a portion of the lamps are electrically coupled to a respective one of the current drivers, and the lamp controller is configured to set a current drawn by each said current driver during each said time on-interval to respective magnitudes that facilitate the visual appearance of the uniform illumination of the array of keys.

4. The input device according to any preceding claim, wherein the illumination system comprises a plurality of electronic switches, each said electronic switch is electrically coupled to at least one of the lamps, and the lamp controller is electrically coupled to the switches and is configured to open and close each said switch for the associated on-time interval.

5. The input device according to Claim 4, wherein the lamps are electrically arranged in an array of rows and columns, and each said switch is electrically coupled to a respective one of the rows and columns.

6. The input device according to any preceding claim, wherein the light guide is substantially planar, and the lamps are disposed substantially equidistantly throughout the light guide.

7. An electronic communications device comprising:
an input device for providing manual input of one of characters and commands to the communications device, the input device comprising at least one key and an illumination system, the illumination system comprising a light guide proximate to the at least one key, and a plurality of lamps mounted to the light guide, the light guide being configured to illuminate the at least one key via the lamps; and
a lamp controller electrically coupled to the lamps and being configured to repeatedly illuminate the lamps each for a respective on-time interval of a common illumination period, the location of the lamps and the illumination period and each said on-time interval being selected for visual appearance of substantially uniform illumination of the input device.

8. The communications device according to Claim 7, wherein the selected illumination period and on-time intervals set an associated average current draw for each said lamp, and an apparent intensity of light emitted by each said lamp is greater than if each said lamp continuously drew said average current.

9. The input device according to any of claims 1 to 6, or the communications device according to Claim 7 or Claim 8, wherein each said on-time interval is between 5% and 25% of the illumination period, and preferably is one of 5%, 6.25%, 8.3%, 12.5% and 25% of the illumination period.

10. The communications device according to any of Claims 7 to 9, wherein the illumination system comprises at least one adjustable current driver, a portion of the lamps are electrically coupled to a respective one of the current drivers, and the lamp controller is configured to set a current drawn by each said current sink during each said on-time interval to respective magnitudes that facilitate the visual appearance of the uniform illumination of the input device.

11. The communications device according to any of Claims 7 to 10, wherein the illumination system comprises a plurality of electronic switches, each said electronic switch is electrically coupled to at least one of the lamps, and the lamp controller is electrically coupled to the switches and is configured to open and close each said switch for the associated on-time interval.

12. The communications device according to any of Claims 7 to 11, further comprising an ambient light sensor for measuring ambient light intensity, and the lamp controller is further configured to illuminate the input device in accordance with the measured light intensity.

13. A method of illuminating an input device of an electronic communications device, the input device being configured to provide manual input of one of data and commands to the communications device, the communications device comprising a light guide proximate to the input device, and a plurality of lamps mounted to the light guide, the method comprising:
repeatedly illuminating the lamps each for a respective on-time interval of a common illumination period, the illumination period and each said on-time interval being selected for visual appearance of substantially uniform illumination of the input device.

14. The method according to Claim 13, wherein the selected illumination period and on-time intervals set an associated average current draw for each said lamp, and an apparent intensity of light emitted by each said lamp is greater than if each said lamp continuously drew said average current.

15. The method according to Claim 13 or Claim 14, wherein the repeated illumination step comprises illuminating and extinguishing each of the lamps at most once over the illumination period.

## Amended claims

### Amended claims in accordance with Rule 137(2) EPC.

**1.** An input device comprising:
an array of keys each comprising a key face configured for transmission of light; and
an illumination system comprising:
a light guide disposed below the keys,
a plurality of lamps mounted to the light guide,
at least one adjustable current driver, a portion of the lamps being electrically coupled to said at least one adjustable current driver,
a plurality of electronic switches, each of said electronic switches being electrically coupled to at least one of the lamps, and
a lamp controller electrically coupled to the lamps and the switches,
the lamp controller being configured to open and close each said switch to repeatedly illuminate the lamps each for a respective on-time interval of a common illumination period, comprising illuminating and extinguishing each of the lamps at most once over the illumination period,
the lamp controller being configured to set a current drawn by said at least one adjustable current driver during each said on-time interval to respective magnitudes to account for lack of uniformity of the light guide.

**2.** The input device according to Claim 1, wherein the selected illumination period and on-time intervals set an associated average current draw for each said lamp, and an apparent intensity of light emitted by each said lamp is greater than if each said lamp continuously drew said average current.

**3.** The input device according to claim 1 or claim 2, wherein the lamps are electrically arranged in an array of rows and columns, and each said switch is electrically coupled to a respective one of the rows and columns.

**4.** The input device according to any preceding claim, wherein the light guide is substantially planar, and the lamps are disposed substantially equidistantly throughout the light guide.

**5.** The input device according to any preceding claim, wherein the input device is part of an electronic communications device.

**6.** The input device according to any preceding claim, wherein each said on-time interval is between 5% and 25% of the illumination period, and preferably is one of 5%, 6.25%, 8.3%, 12.5% and 25% of the illumination period.

**7.** The input device according to any of claim 5, or claim 6 when dependent on claim 5, wherein the electronic communications device comprises an ambient light sensor for measuring ambient light intensity, and the lamp controller is further configured to illuminate the input device in accordance with the measured light intensity.

**8.** A method of illuminating an input device of an electronic communications device, the input device being configured to provide manual input of one of data and commands to the communications device,
the communications device comprising:
a light guide proximate to the input device;
a plurality of lamps mounted to the light guide;
at least one adjustable current driver, a portion of the lamps being electrically coupled to said at least one adjustable current driver; and
a plurality of electronic switches, each of said electronic switches being electrically coupled to at least one of the lamps,
the method comprising:
opening and closing each said switch to repeatedly illuminate the lamps each for a respective on-time interval of a common illumination period, comprising illuminating and extinguishing each of the lamps at most once over the illumination period; and
setting a current drawn by said at least one adjustable current driver during each said on-time interval to respective magnitudes to account for lack of uniformity in the light guide.

**9.** The method according to claim 8, wherein the selected illumination period and on-time intervals set an associated average current draw for each said lamp, and an apparent intensity of light emitted by each said lamp is greater than if each said lamp continuously drew said average current.
